# EUROPÄISCHE PATENTSCHRIFT

(11) **EP 1 068 561 B1**
(45) Veröffentlichungstag und Bekanntmachung des Hinweises auf die Patenterteilung: **27.11.2002**
(21) Anmeldenummer: 99916797.6
(22) Anmeldetag: 17.03.1999
(51) Int. Cl.: G05B 19/042

(54) **FEHLERSICHERES DATENÜBERTRAGUNGSSYSTEM UND -VERFAHREN**
ERROR PROTECTED DATA TRANSFER SYSTEM AND METHOD
PROCEDE ET DISPOSITIF DE TRANSMISSION DE DONNEES PROTEGES CONTRE LES DEFAILLANCES

(30) Priorität: 30.03.1998 DE 19814102
(43) Veröffentlichungstag der Anmeldung: 17.01.2001
(73) Patentinhaber: SIEMENS AKTIENGESELLSCHAFT, 80333 München (DE)
(72) Erfinder: INDEFREY, Klaus, D-90489 Nürnberg (DE); KRÄMER, Werner, D-92421 Schwandorf (DE); WIESGICKL, Bernhard, D-92249 Vilseck (DE)
(86) Internationale Anmeldenummer: DE9900744
(87) Internationale Veröffentlichungsnummer: WO99050723

(56) Entgegenhaltungen:
- EP-A- 0 837 394
- EP-B- 0 216 372
- DE-A- 4 312 305
- DE-A- 4 433 013
- DE-A- 19 629 868
- HERTEL J: "ABSOLUT SICHERES GELEIT. REDUNDANZSTRUKTUREN IM MODERNEN PROZESSLEITSYSTEM TELEPERM XP" MESSEN UND PRUFEN, Bd. 31, Nr. 10, 1. Oktober 1995 (1995-10-01), Seiten 10, 12-14, 16, XP000543694 ISSN: 0937-3446

## Beschreibung

Die vorliegende Erfindung betrifft ein Datenübertragungsverfahren zwischen einer sicheren Recheneinheit, z.B. einer fehlersicheren speicherprogrammierbaren Steuerung, und einer Anzahl von Ein-/Ausgabeeinheiten über eine an die sichere Recheneinheit angeschlossene Bussteuereinheit und ein serielles Bussystem, wobei die Bussteuereinheit zyklisch die an das Bussystem angeschlossenen Ein-/Ausgabeeinheiten anspricht und eine Mehrbitnachricht an die jeweils angesprochene Ein-/Ausgabeeinheit übermittelt.

Ein derartiges Datenübertragungsverfahren ist z.B. unter der Bezeichnung AS-i (= Aktuator-Sensor-Interface) bekannt.

Bei Anlagen und Maschinen der industriellen Automatisierungstechnik müssen gefährliche Zustände sicher erkannt und die gesteuerte Anlage bzw. Maschine in einem solchen Fall in einen sicheren Zustand überführt werden. Zur Übertragung derart sicherheitsrelevanter Signale werden im Stand der Technik zumeist eigene Erfassungs-, Verkabelungs- und Auswertesysteme eingesetzt.

Das Verwenden eigener Erfassungs-, Verkabelungs- und Auswertesysteme erfordert insbesondere einen hohen Verdrahtungsaufwand und birgt die Gefahr von Fehlverdrahtungen in sich. Es existieren daher Bestrebungen, auch sicherheitsrelevante Signale über ein Bussystem zu übertragen. Die Sicherheit und Zuverlässigkeit der Datenübertragung darf durch ein solches Bussystem aber nicht beeinträchtigt werden.

Die sicherheitsrelevanten Signale könnten zwar über ein separates, fehlersicheres Bussystem übertragen werden. Dies läuft aber der allgemeinen Tendenz zur Minimierung des Verkabelungsaufwands entgegen.

Aus der DE 43 12 305 A1 ist ein Datenübertragungsverfahren zwischen einer fehlersicheren speicherprogrammierbaren Steuerung und einer Anzahl von Ein-/Ausgabeeinheiten über eine an die speicherprogrammierbare Steuerung angeschlossene Bussteuereinheit und ein serielles Bussystem bekannt, wobei die Bussteuereinheit an die an das Bussystem angeschlossenen Ein-/Ausgabeeinheiten Nachrichten übermittelt. Bei diesem Datenübertragungsverfahren ist mindestens eine der Ein-/Ausgabeeinheiten als Sicherheitseinheit ausgebildet. An die Sicherheitseinheit übermittelte Nachrichten werden redundant übermittelt und auf Identität überprüft. Die übermittelten Nachricht werden nur bei Identität als ordnungsgemäß interpretiert.

Die Aufgabe der vorliegenden Erfindung besteht darin, ein weiteres Datenübertragungsverfahren zur Verfügung zu stellen, mittels dessen es möglich ist, über ein nicht fehlersicheres Bussystem sicherheitsrelevante Signale zu übertragen.

Die Aufgabe wird bei einem Datenübertragungsverfahren der eingangs genannten Art dadurch gelöst, daß mindestens eine der Ein-/Ausgabeeinheiten als Sicherheitseinheit ausgebildet ist, daß die an die Sicherheitseinheit übermittelte Mehrbitnachricht mindestens ein Kontrollbit aufweist und daß die Sicherheitseinheit die übermittelte Mehrbitnachricht nur dann als ordnungsgemäß interpretiert, wenn das Kontrollbit innerhalb einer vorbestimmten Überwachungszeit alterniert.

Denn hierdurch wird - auch bei nichtredundanter Datenübertragung - ein unsicherer Zustand nicht nur dann vermieden, wenn überhaupt keine Mehrbitnachrichten mehr übertragen werden, z.B. bei einem Ausfall der Bussteuereinheit. Ein unsicherer Zustand wird auch dann vermieden, wenn fehlerhafte Mehrbitnachrichten übertragen werden.

Wenn die Sicherheitseinheit als Ausgabeeinheit zum Ansteuern eines Ausgangs ausgebildet ist, kann sie z.B. ein Zeitglied aufweisen, das bei Ablauf der Überwachungszeit den Ausgang in einen sicheren Zustand überführt, wobei das Zeitglied bei jedem Übermitteln einer ordnungsgemäßen Mehrbitnachricht zurückgesetzt wird.

Das Datenübertragungsverfahren ist noch sicherer, wenn die Sicherheitseinheit unter zwei verschiedenen Adressen ansprechbar ist, der Sicherheitseinheit unter den beiden Adressen jeweils eine Mehrbitnachricht übermittelt wird und die Sicherheitseinheit die übermittelten Mehrbitnachrichten nur dann als ordnungsgemäß interpretiert, wenn die beiden Mehrbitnachrichten miteinander korrespondieren.

Die Mehrbitnachricht besteht vorzugsweise aus mindestens vier Nutzbit.

Weitere Vorteile und Einzelheiten ergeben sich aus der nachfolgenden Beschreibung eines Ausführungsbeispiels. Dabei zeigen in Prinzipdarstellung
- FIG 1: ein Datenübertragungssystem,
- FIG 2: einen Datentransfer und
- FIG 3: eine Sicherheitseinheit.

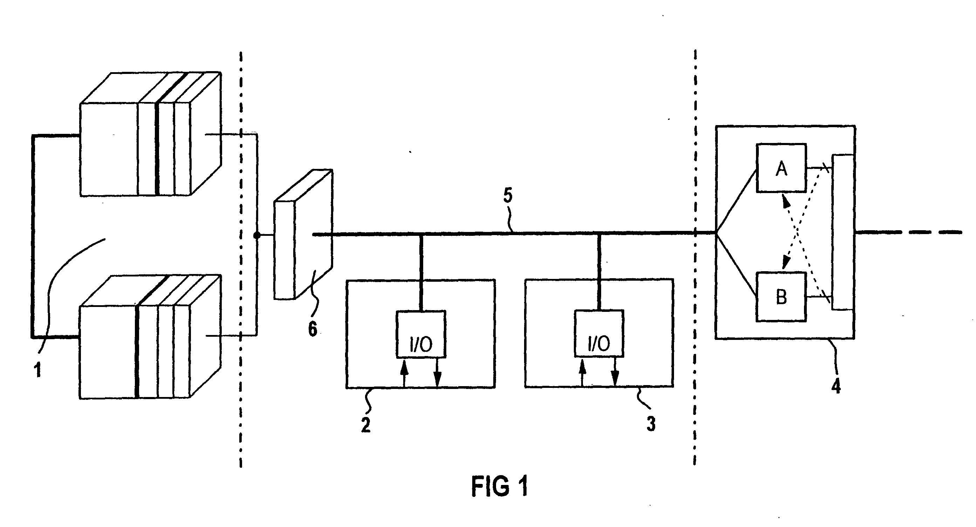

Gemäß FIG 1 besteht ein Datenübertragungssystem aus einer sicheren Recheneinheit 1 und einer Anzahl von Ein-/Ausgabeeinheiten 2 bis 4. Die sichere Recheneinheit 1 ist im vorliegenden Fall als fehlersichere speicherprogrammierbare Steuerung ausgebildet. Eine derartige speicherprogrammierbare Steuerung wird z.B. von der Siemens AG unter der Bezeichnung SIMATIC S5-95F hergestellt und vertrieben.

Die Ein-/Ausgaheeinheiten 2, 3 sind übliche Ein-/Ausgabeeinheiten, mittels derer bis zu vier Binärsignale pro Einheit verarbeitbar sind. Die Ein-/Ausgabeeinheit 4 hingegen ist eine Sicherheitseinheit. Sie kann genau ein Binärdatum verarbeiten. Prinzipiell könnte die Sicherheitseinheit 4 aber auch mehr Daten verarbeiten. Entscheidend ist, daß sie mindestens ein Datum weniger verarbeitet als Nutzbit an sie übertragen werden. Denn dann kann dieses redundante Nutzbit zum Überprüfen des Datenübertragungssystems verwendet werden.

Die Ein-/Ausgabeeinheiten 2 bis 4 sind an ein serielles Bussystem 5 angeschlossen. An das Bussystem 5 ist ferner eine Bussteuereinheit 6 angeschlossen, die ihrerseits wiederum an die sichere Recheneinheit 1 angeschlossen ist. Zur Datenübertragung zwischen der sicheren Recheneinheit 1 und den Ein-/Ausgabeeinheiten 2 bis 4 steuert die sichere Recheneinheit 1 die Bussteuereinheit 6 an. Diese spricht nacheinander die Ein-/Ausgabeeinheiten 2 bis 4 an und übermittelt eine aus mindestens vier Nutzbit bestehende Mehrbitnachricht 8 an die jeweils angesprochene Ein-/Ausgabeeinheit 2 bis 4.

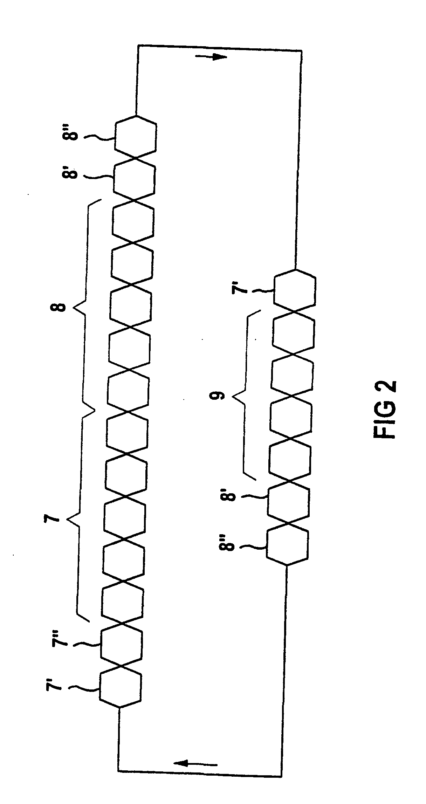

Das Format eines Datentransfers ist in FIG 2 dargestellt. Gemäß FIG 2 sendet die Bussteuereinheit 6 nach einem Startbit 7' und einem Steuerbit 7" zunächst eine Adresse 7 über das Bussystem 5, um eine der Ein-/Ausgabeeinheiten 2 bis 4 anzusprechen. Sodann sendet sie die Mehrbitnachricht 8, die aus fünf Nutzbit besteht. Das erste Nutzbit ist ein Umschaltbit, das von der angesprochenen Ein-/Ausgabeeinheit 2 bis 4 intern verarbeitet wird. Das zweite bis fünfte Nutzbit sind die eigentlichen Daten. An die Mehrbitnachricht 8 schließen sich ein Prüfbit 8' und ein Endebit 8" an.

Die angesprochene Ein-/Ausgabeeinheit 2 bis 4 sendet nach einem Startbit 7' eine Antwort 9 zurück, die aus vier Nutzbit besteht. An die Antwort 9 schließen sich wieder ein Prüfbit 8' und ein Endebit 8" an.

Die Adresse 7 wird von der Bussteuereinheit 6 nach jedem Datentransfer inkrementiert, bis alle Ein-/Ausgabeeinheiten 2 bis 4 angesprochen sind. Dann wird wieder die Ein-/Ausgabeeinheit 2 bis 4 mit der niedrigsten Adresse angesprochen, und der Zyklus beginnt von neuem.

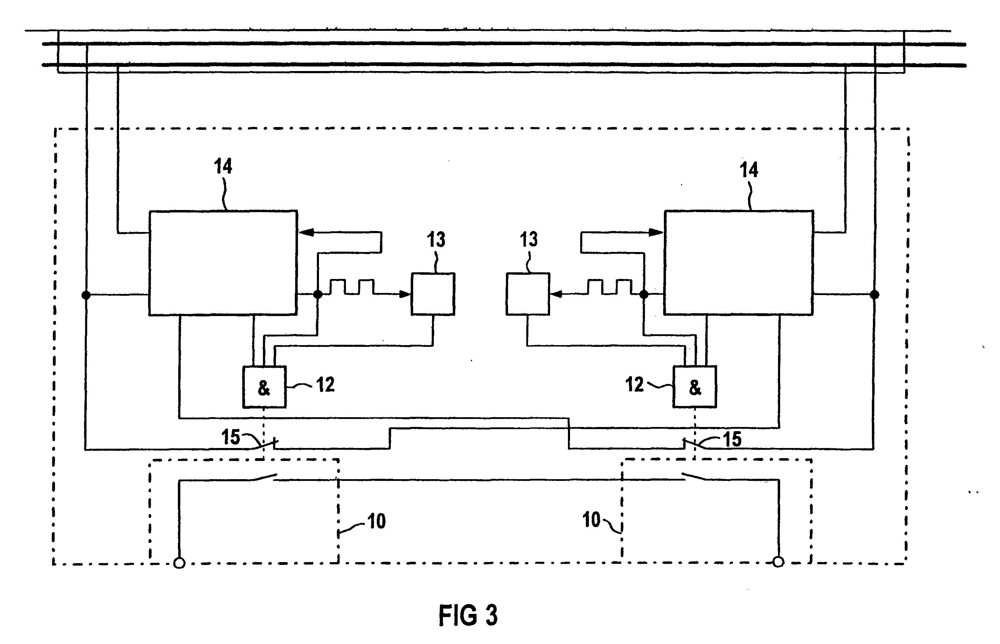

Gemäß FIG 3 ist die Sicherheitseinheit 4 im vorliegenden Fall als Ausgabeeinheit zum Ansteuern eines Ausgangs 10 ausgebildet. Der Sicherheitseinheit 4 wird also von der Bussteuereinheit 6 übermittelt, ob der Ausgang 10 angesteuert werden soll oder nicht. Der Ausgang 10 darf dabei nur dann angesteuert werden, wenn ein sicherer Zustand einer gesteuerten Anlage bzw. einer gesteuerten Maschine vorliegt. Von der gesteuerten Anlage bzw. der gesteuerten Maschine darf also keine Gefährdung ausgehen. Ansonsten muß der Ausgang 10 sofort in den nicht angesteuerten Zustand überführt werden.

Zur Ermittlung des Ansteuersignals für den Ausgang 10 wertet die Sicherheitseinheit 4 zunächst das zweite Nutzbit der übermittelten Mehrbitnachricht 8 aus. Nur wenn das zweite Nutzbit den Wert Eins hat, wird der Ausgang 10 angesteuert. Ansonsten wird der Ausgang 10 in den sicheren, nicht angesteuerten Zustand überführt.

Das dritte und das vierte Nutzbit sind für die Sicherheitseinheit 4 im vorliegenden Fall ohne Belang. Mit ihnen könnten aber gegebenenfalls weitere Ausgänge angesteuert werden.

Das fünfte Nutzbit der Mehrbitnachricht 8 ist ein Kontrollbit. Es wird einem Zeitglied 13 zugeführt. Das Zeitglied 13 wird jedesmal zurückgesetzt, wenn das ihm zugeführte Kontrollbit bezüglich des ihm zuvor zugeführten Kontrollbit alterniert. Behält das Kontrollbit hingegen seinen Wert bei, so läuft das Zeitglied 13 nach einer vorbestimmten Überwachungszeit ab. In diesem Fall übermittelt das Zeitglied 13 ein Null-Signal an ein UND-Glied 12, so daß der Ausgang 10 auch in diesem Fall in den nicht angesteuerten Zustand übergeht. Auch in diesem Fall wird also ein unsicherer Zustand der gesteuerten Anlage bzw. der gesteuerten Maschine vermieden. Die Überwachungszeit ist dabei derart bestimmt, daß einerseits bei einem ordnungsgemäßen (zyklischen) Busverkehr stets ein rechtzeitiges Rücksetzen des Zeitgliedes 13 vor dessen Ablauf erfolgt und andererseits bei einem nicht ordnungsgemäßen Busverkehr spätestens nach einer anlagen- bzw. maschinenspezifischen Reaktionszeit der Ausgang 10 in den nicht angesteuerten Zustand übergeht.

Wie ferner ersichtlich ist, ist die Sicherheitseinheit 4 redundant aufgebaut. Sie weist daher zwei Busbausteine 14 auf, so daß sie unter zwei verschiedenen Adressen ansprechbar ist. Jedem der Busbausteine 14 wird unter seiner eigenen Adresse jeweils eine eigene Mehrbitnachricht 8 übermittelt. Jeder der Busbausteine 14 wertet die ihm übermittelte Mehrbitnachricht 8 autonom aus und steuert sein UND-Glied 12 entsprechend an.

Die Ausgänge 10 der beiden Busbausteine 14 sind in Reihe geschaltet. Im Ergebnis werden die übermittelten Mehrbitnachrichten 8 daher nur dann als ordnungsgemäß interpretiert, wenn sie miteinander korrespondieren. Die Sicherheit der Datenübertragung kann dabei noch weiter erhöht werden, wenn die Mehrbitnachrichten 8 den Busbausteinen 14 invers zueinander übermittelt werden.

Die Busbausteine 14 sind über Schalter 15 gegenseitig verkoppelt. Jeder der Busbausteine 14 kennt daher den Schaltzustand des jeweils anderen Busbausteins 14. Die Busbausteine 14 können folglich in ihren Antworten 9 nicht nur ihren eigenen Schaltzustand, sondern auch den Schaltzustand des jeweils anderen Busbausteins 14 an die sichere Recheneinheit 1 zurückmelden. Die Sicherheit des Datenübertragungssystems wird somit noch weiter erhöht.

Obenstehend wurde ein Datenübertragungssystems mit einer einzigen Sicherheitseinheit 4 beschrieben, die als Ausgabeeinheit zum Ansteuern eines Ausgangs 10 ausgebildet ist. Es können aber selbstverständlich mehrere Sicherheitseinheiten mit dem Bussystem 5 verbunden sein. Auch können die Sicherheitseinheiten als sichere Eingabeeinheiten ausgebildet sein.

## Patentansprüche

1. Datenübertragungsverfahren zwischen einer sicheren Recheneinheit (1), z.B. einer fehlersicheren speicherprogrammierbaren Steuerung (1), und einer Anzahl von Ein-/Ausgabeeinheiten (2 bis 4) über eine an die sichere Recheneinheit (1) angeschlossene Bussteuereinheit (6) und ein serielles Bussystem (5), wobei die Bussteuereinheit (6) zyklisch die an das Bussystem (5) angeschlossenen Ein-/Ausgabeeinheiten (2 bis 4) anspricht und eine Mehrbitnachricht (8) an die jeweils angesprochene Ein-/Ausgabeeinheit (z.B. 4) übermittelt,
**dadurch gekennzeichnet,**
- **daß** mindestens eine der Ein-/Ausgabeeinheiten (4) als Sicherheitseinheit (4) ausgebildet ist,
- **daß** die an die Sicherheitseinheit (4) übermittelte Mehrbitnachricht (8) mindestens ein Kontrollbit aufweist und
- **daß** die Sicherheitseinheit (4) die übermittelte Mehrbitnachricht (8) nur dann als ordnungsgemäß interpretiert, wenn das Kontrollbit innerhalb einer vorbestimmten Überwachungszeit alterniert.

2. Datenübertragungsverfahren nach Anspruch 1,
**dadurch gekennzeichnet,**
- **daß** die Sicherheitseinheit (4) als Ausgabeeinheit zum Ansteuern eines Ausgangs (10) ausgebildet ist,
- **daß** sie ein Zeitglied (13) aufweist, das bei Ablauf der Überwachungszeit den Ausgang (10) in einen sicheren Zustand überführt, und
- **daß** das Zeitglied (13) bei jedem Übermitteln einer ordnungsgemäßen Mehrbitnachricht (8) zurückgesetzt wird.

3. Datenübertragungsverfahren nach Anspruch 1 oder 2,
**dadurch gekennzeichnet,**
- **daß** die Sicherheitseinheit (4) unter zwei verschiedenen Adressen ansprechbar ist,
- **daß** der Sicherheitseinheit (4) unter den beiden Adressen jeweils eine Mehrbitnachricht (8) übermittelt wird und
- **daß** die Sicherheitseinheit (4) die übermittelten Mehrbitnachrichten (8) nur dann als ordnungsgemäß interpretiert, wenn die beiden Mehrbitnachrichten (8) miteinander korrespondieren.

4. Datenübertragungsverfahren nach Anspruch 1, 2 oder 3,
**dadurch gekennzeichnet, daß** die Mehrbitnachricht (8) aus mindestens vier Nutzbit besteht.

## Claims

1. Method of data transmission between a secure arithmetic unit (1), e.g. a failsafe stored-program controller (1), and a number of input/output units (2 to 4) via a bus control unit (6) connected to the secure arithmetic unit (1) and a serial bus system (5), whereby the bus control unit (6) cyclically addresses the input/output units (2 to 4) connected to the bus system (5) and transmits a multiple-bit message (8) to the input/output unit (e.g. 4) addressed in each case, **characterised in that**
- at least one of the input/output units (4) is configured as a security unit (4)
- the multiple-bit message (8) transmitted to the security unit (4) has at least one control bit and
- the security unit (4) interprets the transmitted multiple-bit message (8) as correct only if the control bit alternates within a predetermined monitoring period.

2. Method of data transmission according to Claim 1, **characterised in that**
- the security unit (4) is configured as an output unit for controlling an output (10),
- it has a timing element (13) which on expiry of the monitoring period switches the output (10) to a secure state, and
- the timing element (13) is reset every time a correct multiple-bit message (8) is transmitted.

3. Method of data transmission according to Claim 1 or 2, **characterised in that**
- the security unit (4) can be addressed under two different addresses,
- a multiple-bit message (8) is transmitted to the security unit (4) under both the addresses in each case, and
- the security unit (4) interprets the multiple-bit messages (8) transmitted as correct only if the two multiple-bit messages (8) correspond to one another.

4. Method of data transmission according to Claims 1, 2 or 3, **characterised in that** the multiple-bit message (8) consists of at least four data bits.

## Revendications

1. Procédé de transmission de données entre un calculateur protégé (1), par exemple une commande (1) programmable en mémoire et protégée contre les erreurs, et un certain nombre d'unités d'entrée/sortie (2 à 4) par l'intermédiaire d'une unité de commande de bus (6) raccordée au calculateur protégé (1) et d'un système de bus sériel (5), l'unité de commande de bus (6) s'adressant de façon cyclique aux unités d'entrée/sortie (2 à 4) raccordées au système de bus (5) et transmettant une information à plusieurs bits (8) à l'unité d'entrée/sortie respectivement adressée (par exemple 4),
**caractérisé par le fait que**
- au moins l'une des unités d'entrée/sortie (4) est conçue comme une unité de sécurité (4),
- l'information à plusieurs bits (8) transmise à l'unité de sécurité (4) comporte au moins un bit de contrôle, et
- l'unité de sécurité (4) n'interprète comme normale l'information à plusieurs bits (8) transmise que si le bit de contrôle alterne à l'intérieur d'un temps de surveillance prédéterminé.

2. Procédé de transmission de données selon la revendication 1,
**caractérisé par le fait que**
- l'unité de sécurité (4) est conçue comme une unité de sortie pour la commande d'une sortie (10),
- elle comporte un élément temporisateur (13) qui met la sortie (10) dans un état sûr à l'expiration du temps de surveillance, et
- l'élément temporisateur (13) est remis à zéro à chaque transmission d'une information à plusieurs bits (8) normale.

3. Procédé de transmission de données selon la revendication 1 ou 2,
**caractérisé par le fait que**
- l'unité de sécurité (4) peut être adressée sous deux adresses différentes,
- une information à plusieurs bits (8) est transmise à l'unité de sécurité (4) sous chacune des deux adresses, et
- l'unité de sécurité (4) n'interprète comme normales les informations à plusieurs bits (8) transmises que si les informations à plusieurs bits (8) coïncident.

4. Procédé de transmission de données selon la revendication 1, 2 ou 3,
**caractérisé par le fait que** l'information à plusieurs bits (8) est constituée d'au moins quatre bits utiles.
